# EUROPÄISCHE PATENTSCHRIFT

(11) **EP 1 991 739 B1**
(45) Veröffentlichungstag und Bekanntmachung des Hinweises auf die Patenterteilung: **18.04.2012**
(21) Anmeldenummer: 07711215.9
(22) Anmeldetag: 27.02.2007
(51) Int. Cl.: E01D 22/00

(54) **VERFAHREN UND VORRICHTUNG ZUR INNENSANIERUNG KORRODIERTER HOHLPROFILE**
METHOD AND DEVICE FOR THE INTERNAL REPAIR OF CORRODED HOLLOW PROFILES
PROCÉDÉ ET DISPOSITIF DE REMISE EN ÉTAT DE L'INTÉRIEUR DE PROFILÉS CREUX ATTAQUÉS PAR LA CORROSION

(30) Priorität: 03.03.2006 DE 102006010948
(43) Veröffentlichungstag der Anmeldung: 19.11.2008
(73) Patentinhaber: Hölterhoff, Jens Prof., 13465 Berlin (DE); Latz, Kersten Prof., 23628 Krummesse (DE)
(72) Erfinder: Hölterhoff, Jens Prof., 13465 Berlin (DE); Latz, Kersten Prof., 23628 Krummesse (DE)
(74) Vertreter: Wablat, Wolfgang
(86) Internationale Anmeldenummer: PCT/DE2007/000378
(87) Internationale Veröffentlichungsnummer: WO 2007/098748

(56) Entgegenhaltungen:
- EP-A- 1 262 708
- EP-A1- 0 000 576
- DE-A1- 4 417 753
- DE-A1- 4 424 643
- DE-A1- 19 701 010
- DE-U1- 9 311 773
- WESSING W: "RELINING-VERFAHREN MIT KUNSTSTOFFROHR-LINERN RELINING METHODS USING PLASTIC LINERS" 3R INTERNATIONAL, VULKAN-VERLAG, ESSEN, DE, Bd. 44, Nr. 11, 2005, Seiten 634-641, XP001235602 ISSN: 0340-3386

## Beschreibung

Die Erfindung betrifft ein Verfahren zur Innensanierung korrodierter Hohlprofile, insbesondere der Trapez-, Dreiecks- oder Trog-Hohlprofile von in Brückenkonstruktionen montierten orthotroper Fahrbahnplatten von Stahlbrücken sowie eine Vorrichtung zur Durchführung des Verfahrens.

Orthotrope Platten sind Flächentragwerke, die als Decken-und Fahrbahnplatten im Stahlbau, insbesondere im Brückenbau, anstelle aufgegliederter Trägerroste, bestehend aus Längs- und Querträgern, verwendet werden. Bei orthotropen Platten, insbesondere bei den im Brückenbau eingesetzten Fahrbahnplatten, können unter bestimmten Bedingungen aufgrund der über kleine Risse in den Schweißnähten eintretenden Feuchtigkeit im Innern der an der Unterseite der Fahrbahnplatte angeschweißten - beispielsweise trapezförmigen - Hohlprofile Korrosionserscheinungen auftreten, so dass die Tragfähigkeit des Flächentragwerks erheblich beeinträchtigt wird. Bei über Gewässer führenden Brücken kann sich in den an sich geschlossenen, entsprechend der Länge der Brücke oftmals sehr langen Hohlprofilen der orthotropen Platten sogar eine große Menge - gegebenenfalls aggressive Bestandteile enthaltenden - Wassers ansammeln, so dass die Platten, abgesehen von der Korrosion der Hohlprofile, übermäßig belastet werden. Aufgrund der durch Korrosion verringerten Wandstärke der Hohlprofile verschlechtern sich die Festigkeitseigenschaften der neben den Verkehrslasten zudem auch durch Schwingungen und das von außen aufgenommene Wasser belasteten orthotropen Platten.

Da die Hohlprofile der orthotropen Platten von Brücken sehr lang sind, oftmals mehrere hundert Meter, und nicht begehbar sind, ist eine nachträgliche Abdichtung des Hohlprofils gegenüber von außen eindringendem Wasser und ein verlässlicher, dauerhafter und gleichmäßiger Korrosionsschutz mit herkömmlichen Beschichtungsverfahren oder durch Ausschäumen nicht mit Sicherheit gewährleistet. Zudem würde das vollständige Ausschäumen der Hohlprofile auch zu einer unzulässigen Erhöhung des Gewichts und somit zu einer Verringerung der Tragfähigkeit führen.

In W. Weßing "Relining-Verfahren mit Kunststoffrohrlinern, Vulkan-Verlag Essen, DE, Band 44, Nr. 11., 2005, Seiten 634 - 641, ISSN 0340-3386 wird ein Gewebeschlauch-Relining-Verfahren offenbart, bei dem die Gewebeschläuche 2-schichtig aufgebaut sind und ein Trägermedium aus Polyestergarn und eine Faserbeschichtung aus Polyester bzw. Polyethylen bei einer Gesamtwandstärke von 3 bis 4 mm aufweisen. Derart aufgebaute Gewebeschläuche halten einem Systemdruck von mehr als 10 bar stand und bersten in der Regel erst bei Kurzzeitberstdrücken von mehr als 130 bar.

Der Erfindung liegt die Aufgabe zugrunde, ein Verfahren zur Innensanierung der dreieck-, trapez- oder trogförmig ausgebildeten Hohlprofile von insbesondere in einer Brückenkonstruktion montierten orthotropen Platten anzugeben, das in allen Innenflächenbereichen des Hohlprofils den Anforderungen an einen wirksamen Korrosionsschutz sowie an die erforderlichen Festigkeitseigenschaften und eine geringe Belastung gerecht wird. Ziel der Erfindung ist es weiterhin, eine Vorrichtung zur Durchführung des Verfahrens anzugeben.

Erfindungsgemäß wird die Aufgabe mit einem Verfahren gemäß den Merkmalen des Patentanspruchs 1 gelöst. Vorteilhafte Weiterbildungen der Erfindung sind in den Unteransprüchen 2 bis 10 aufgeführt.

Eine Vorrichtung zur Durchführung des Verfahrens, und zwar zum schonenden Einbringen eines erfindungsgemäßen gefalteten Gewebeschlauchs in ein Hohlprofil ist Gegenstand des Nebenanspruchs 11 sowie der Unteransprüche 12 bis 15.

Der Kern der Erfindung besteht darin, dass die sich in Längsrichtung über eine große Länge erstreckenden Hohlprofile, und zwar insbesondere von orthotropen Fahrbahnplatten, nach der Reinigung und Entrostung mit einem rotierenden und entsprechend der Anordnung einer den Wasserstrahl erzeugenden Rotationsdüse zu den Innenflächen des Hohlprofils winkelverstellbaren Höchstdruck-Wasserstrahl an der Innenfläche mit einem mit Kunststoff beschichteten oder getränkten dehnbaren Gewebeschlauch unter der Wirkung eines Druckmediums verklebt und damit gegen von außen eintretende Feuchtigkeit sowie gegen Korrosion geschützt sind. Durch den Gewebeschlauch, der eine innige Verbindung mit dem Hohlprofil eingeht, können zudem die Festigkeitseigenschaften des durch Korrosion gegebenenfalls geschwächten Hohlprofils verbessert werden, und zwar insbesondere dann, wenn in den vorzugsweise aus Polyestergarnen nahtlos rund gewebten Gewebeschlauch ein mehr oder weniger großer Anteil an Metallfasern eingewebt ist oder der Gewebeschlauch vollständig aus Metallfasern gefertigt ist. Ein vorteilhafter weiterer Effekt des mit der Innenfläche des Hohlprofils verbundenen Gewebeschlauchs besteht gerade bei durch Schwingungen stark belasteten Fahrbahnplatten, insbesondere bei einem großen Kunststofffaseranteil im Gewebeschlauch, in einer schwingungsdämpfenden Wirkung. Mit dem vorgeschlagenen Verfahren zur Sanierung von Hohlprofilen, vorzugsweise von orthotropen Platten, wird somit nicht nur das Eindringen von Feuchtigkeit verhindert, sondern es werden Bauelemente, zur Verfügung gestellt, die mit vergleichsweise geringem Aufwand sicher gegen Korrosion geschützt sind und verbesserte mechanische Eigenschaften aufweisen.

Anstelle des kunststoffbeschichteten dehn- und formbaren Gewebeschlauchs können die Hohlprofile auch mit einem in Form und Größe dem Hohlprofil entsprechenden Memory-Kunststoffhohlprofil ausgekleidet werden, das in einer eingefalteten Querschnittsform in das mit einem Kleber beschichtete Hohlprofil eingeführt wird und unter Erwärmung wieder seine ursprüngliche Form annimmt sowie mit einem Druckmedium an die Innenflächen des Hohlprofils gedrückt wird.

In weiterer Ausbildung der Erfindung können der Gewebeschlauch oder das Memory-Kunststoffhohlprofil zusätzlich noch mechanisch, zum Beispiel mit einem Schaumstoffmolch an die Innenflächen des Hohlprofils gepresst werden, um in jedem Fall auch in kritischen - zum Beispiel spitzwinkligen - Eck- oder Schweißnahtbereichen eine innige Verbindung und damit eine sichere Abdichtung zu bewirken.

Alternativ zu dem zuvor erwähnten mechanischen Anpressen des Gewebeschlauchs oder des Kunststoffhohlprofils können kritische Eckbereiche des Hohlprofils, insbesondere spitzwinklige Eck- und Schweißnahtbereiche, vor dem Einbringen der Auskleidung mit einem Kunstharz ausgefüllt werden, wobei die Füllung eine Hohlkehle bildet. Dadurch ist eine zusätzliche Abdichtung und - ohne Hohlraumbildung - ein vollständiges Anlegen der Auskleidung in Eck-/Schweißnahbereichen gewährleistet. Die Ausbildung dieser Hohlkehlfüllung in Eckbereichen erfolgt mit einem durch das Hohlprofil gezogenen und dabei kontinuierlich mit dem Kunstharz versorgten Molch.

Der Gewebeschlauch wird entweder unter fortlaufendendem Umstülpen mittels eines Druckmediums, vorzugsweise Druckluft, in das Hohlprofil hinein und an dessen Innenflächen gedrückt oder die Querschnittsfläche des Gewebeschlauches wird durch Zusammenfalten verkleinert, so dass er im Schutze einer Transportumhüllung ohne Beschädigung in das gegebenenfalls sehr lange Hohlprofil eingezogen und nach dem Herausziehen der Transportumhüllung mit einem Druckmedium innerhalb des Hohlprofils aufgefaltet und an dessen Innenflächen gepresst und mit diesen verklebt werden kann.

Die Vorrichtung zur Durchführung des Verfahrens umfasst zum einen eine Entrostungsvorrichtung, bestehend aus einer in Längsrichtung des Hohlprofils verfahrbaren.rotierenden Düse mit einem schwenkbaren, von einem Taster über eine Steuereinheit gesteuerten Düsenkopf. Dadurch ist es möglich, den Auftreffwinkel des Wasserstrahls auf die Innenfläche und auch den Wasserdruck gezielt zu beeinflussen, so dass ohne zerstörende Wirkung - beispielsweise in kritischen Schweißnahtbereichen - eine optimale Entrostung gewährleistet ist.

Die Vorrichtung zum schonenden Einziehen des gefalteten Gewebeschlauchs in das sehr lange, enge Hohlprofil umfasst eine flexible Transportumhüllung mit an deren freien Längsseiten angebrachten Verschlussösen sowie ein Verschlussseil, an dem die Verschlussösen befestigbar sind, um die in Längsrichtung offene Transportumhüllung beim Einführen des gefalteten Gewebeschlauchs um diesen herum schließen zu können.

Die Transportumhüllung kann aus einem Band oder aus an aneinander gereihten Transportwagen paarweise im Abstand befestigten Tragseilen gebildet sein. Das Band kann mit einem miteingezogenen Zugseil bananenschalenartig wieder aus dem Hohlprofil herausgezogen werden und die Transportwagen mit den Tragseilen können auf einfache Weise ausgefahren werden, und zwar nachdem das Verschlussseil gezogen und der gefaltete Gewebeschlauch in dem Hohlprofil freigegeben wurde.

Ausführungsbeispiele der Erfindung werden anhand der Zeichnung näher erläutert. Es zeigen:
- Fig. 1: eine schematische Detailansicht einer orthotropen Fahrbahnplatte einer Brückenkonstruktion im Schnitt, mit einer in einem trapezförmigen Hohl- profil angeordneten Hochdruckwasserstrahl-Entrostungsvorrichtung;
- Fig. 2: eine Detailansicht der Rotationsdüse der Hochdruckwasserstrahl-Entrostungsvorrichtung nach Fig. 1;
- Fig. 3: einen Vertikalschnitt einer orthotropen Fahrbahnplatte im Bereich eines Hohlprofils, in das nach der Hochdruckwasserstrahl-Entrostung ein wasserundurchlässiger Gewebeschlauch nach Inversion mit Hilfe eines Druckmediums eingebracht ist;
- Fig. 4: einen Längsschnitt nach Fig. 3 mit dem in das Hohlprofil eingebrachten, noch nicht vollflächig anliegenden Gewebeschlauch;
- Fig. 5: einen Vertikalschnitt im Bereich des Hohlprofils mit einem darin angeordneten Schaumstoffmolch zum vollständigen Andrücken des Gewebeschlauches;
- Fig. 6: einen Längsschnitt nach Fig. 5;
- Fig. 7: einen Vertikalschnitt im Bereich des Hohlprofils mit einem in dieses mit Hilfe eines Transportschlauches eingebrachten zusammengefalteten Gewebeschlauch;
- Fig. 8: eine Ansicht des Gewebeschlauchs vor dessen Umschließen mit dem Transportschlauch;
- Fig. 9: eine Schnittansicht nach Fig. 7 mit einer noch anderen Ausführungsform des Transportschlauches in gerafftem Zustand;
- Fig. 10: eine Draufsicht auf den gerafften Transportschlauch nach Fig. 9;
- Fig. 11: einen Vertikalschnitt des Hohlprofils mit einem von einer Vielzahl miteinander verbundener Einziehwagen, an denen der Gewebeschlauch während des Einziehens aufgehängt ist;
- Fig. 12: eine seitliche Schnittansicht nach Fig. 11; und
- Fig. 13: einen Vertikalschnitt des Hohlprofil mit einem in dieses eingezogenen, geschrumpften Kunststoffprofil.

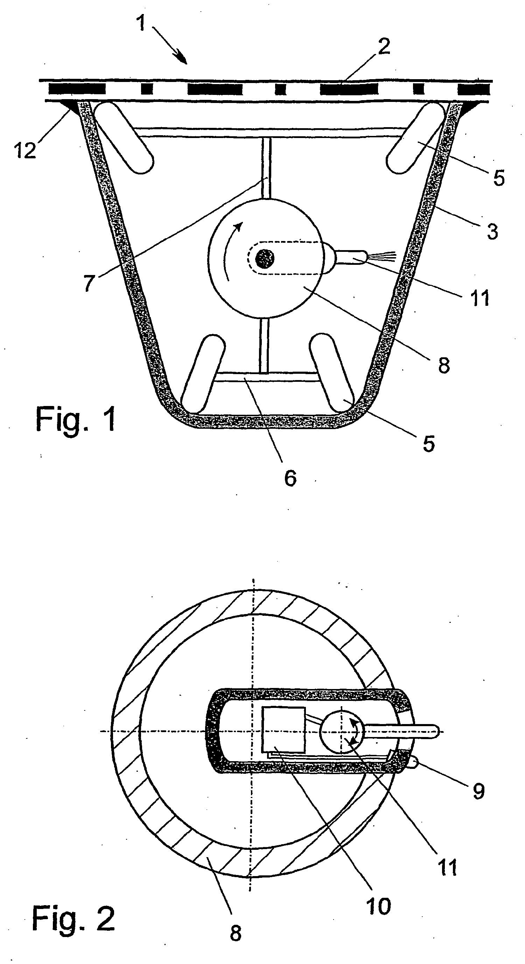

Fig. 1 zeigt einen Abschnitt einer orthotropen Fahrbahnplatte 1, die eine Stahlplatte 2 und mehrere an deren Unterseite angeschweißte, in Längsrichtung verlaufende abgekantete Stahlbleche 3, die mit der Stahlplatte 2 ein trapezförmiges Hohlprofil 4 bilden, umfasst. In dem gegen das Eindringen von Feuchtigkeit und gegen Korrosion zu schützenden Hohlprofil befindet sich ein in den vier Ecken des Hohlprofils 4 auf Rollen 5 zwangsgeführter, verfahrbarer Entrostungswagen 6 mit einer an dessen Rahmen 7 angebrachten und an eine Höchstdruck-Wasserquelle (nicht dargestellt) angeschlossenen Rotationsdüse 8. Am vorderen Ende der Rotationsdüse 8, in die ein Taster 9, der ein der Rotationsdüse zugeordnetes, mit dem Hohlprofil 4 identisches Steuerprofil (nicht dargestellt) abtastet, und eine Steuereinheit 10 integriert sind, befindet sich ein schwenkbarer Düsenkopf 11, dessen Schwenkantrieb an die Steuereinheit 10 angeschlossen ist.

Der mit seinen Rollen 5 in den Ecken des Hohlprofils 4 geführte Entrostungswagen 6 wird mit einer vorgegebenen Geschwindigkeit durch das Hohlprofil 4 gezogen. Der unter hohem Druck austretende rotierende Wasserstrahl trifft auf die Innenwände des Hohlprofils und erzeugt eine metallisch blanke Oberfläche. Mit Hilfe des Tasters 9 und der Steuereinheit 10 wird der Düsenkopf 11 so verschwenkt, dass der rotierende Wasserstrahl in einem vorgegebenen Winkel auf den betreffenden Innenwandbereich des Hohlprofils 4 trifft und eine metallisch blanke Oberfläche erzeugen kann. Mit Hilfe des Tasters 9 und der Steuereinheit 10 kann der Wasserstrahl im Bereich der Verbindungsstellen 12 des abgekanteten Stahlblechs 3 mit der Stahlplatte 2 gedrosselt werden, um die dort befindlichen Schweißnähte nicht zu beschädigen. Das von den Innenwänden abgelöste korrodierte Material wird mit dem Wasserstrahl weggespült.

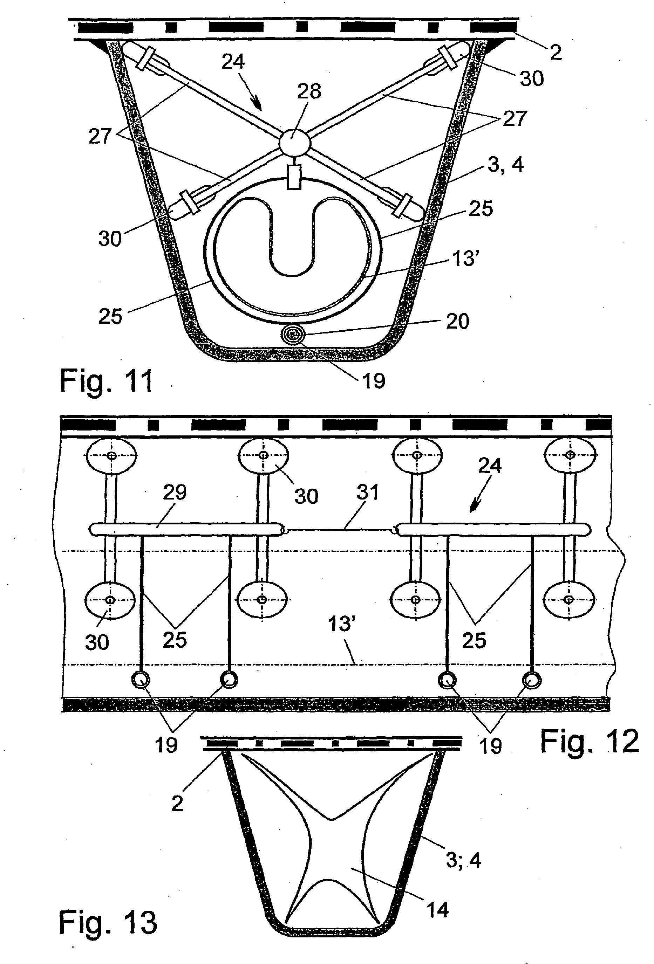

Nach dem Abtrocknen der Innenflächen des Hohlprofils 4 wird in dieses eine wasserundurchlässige Auskleidung, die aus einem mit wasserdichtem Kunststoff getränkten bzw. beschichteten Gewebeschlauch 13 oder einem Kunststoffprofil 14 (Fig. 13) besteht und deren Abwicklung dem Innenmaß des zu sanierenden Hohlprofils 4 entspricht, eingebracht und unter Druck - und Wärmeeinwirkung bei einem "extrusierten" Kunststoffprofil - mittels eines lösemittelfreien Zweikomponentenklebers vollflächig mit dem Innenwänden des Hohlprofils 4 verklebt. Das Aushärten des Klebers kann bei Normaltemperatur oder unter Wärmezufuhr, mit UV-Licht oder Innendruck erfolgen.

Der nahtlos rundgewebte Gewebeschlauch 13 besteht aus Polyesthergarnen oder aus Polyestherfasern und Metallfasern oder auch nur aus Metallfasern, um aufgrund der Materialauswahl und -kombination die Festigkeitseigenschaften und/oder das Schwingungsverhalten der Hohlprofile entsprechend zu beeinflussen. Einer durch Korrosion bedingten Verminderung der Festigkeit der Hohlprofile kann durch die Metallfasern oder einen Metallfaseranteil entgegengewirkt werden, während das Kunststoffgewebe erheblich zur Schwingungsdämpfung beiträgt. Ein wesentlicher Effekt des an den Innenflächen des Hohlprofils 4 vollflächig verklebten Gewebeschlauchs 13 besteht in der Abdichtung des Hohlprofils gegenüber von außen eindringendem Wasser sowie dem Korrosionsschutz.

Das Einbringen des wasserundurchlässigen Auskleidungskörpers, das heißt, des Gewebeschlauchs 13 oder des Kunststoffprofils 14 kann auf unterschiedliche Weise erfolgen.

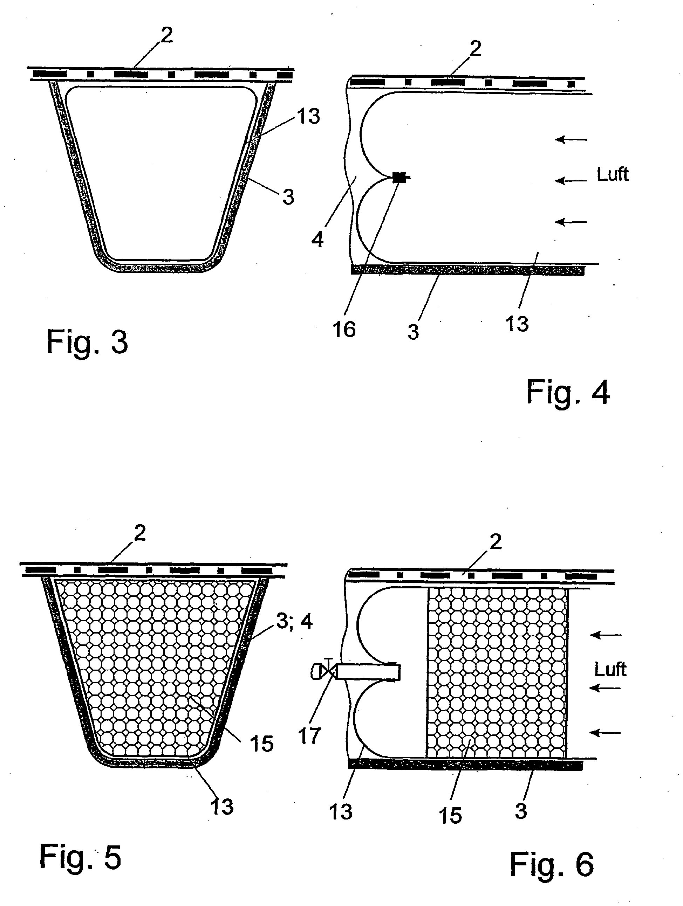

Gemäß einer in den Figuren 3 bis 6 dargestellten ersten Ausführungsvariante wird ein mit wasserundurchlässigem Kunststoff getränkter und an der Innenfläche mit Kleber beschichteter Gewebeschlauch 13 mit einem Ende an einer Seite des Hohlprofils 4 befestigt, die Innenfläche nach außen umgestülpt und mit Hilfe eines Druckmediums immer weiter in das Hohlprofil 4 hinein gedrückt, wobei unter der Wirkung des gasförmigen oder flüssigen Druckmediums die nach außen gewendete, mit Kleber beschichtete Innenfläche des Gewebeschlauches 13 an die Innenfläche des Hohlprofils 4 angedrückt wird.

Wie Fig. 3 zeigt, sind die spitzwinkligen Eckbereiche des Hohlprofils 4 nach dem vorangegangenen Inversionsverfahren möglicherweise nicht vollständig mit dem Gewebematerial bedeckt. Um die vollflächige Abdeckung der Innenfläche und damit die Abdichtung des Hohlkörpers gegenüber der Umgebung sowie einen sicheren Korrosionsschutz zu gewährleisten, wird anschließend in einem zweiten Verfahrensschritt mit einem Druckmedium ein Schaumstoffmolch 15 durch den im Hohlprofil 4 befindlichen Gewebeschlauch 13 gedrückt. Vor dem Einbringen des Schaumstoffmolches 15 wird in das verschlossene Ende 16 des Gewebeschlauchs 14 ein Ventil 17 eingesetzt, um das sich beim Vorschieben des Schaumstoffmolches 15 verdichtende Druckmedium zu entspannen. Das Profil des Schaumstoffmolchs 15 entspricht dem des Hohlprofils 4, so dass der Gewebeschlauch 13 faltenfrei und vollflächig, und zwar auch in spitzwinkligen Ecken, an dem Hohlprofil 4 anliegt.

Das zuvor beschriebene Verfahren wird bei sämtlichen in Längsrichtung der orthotropen Fahrbahnplatte 1 verlaufenden Hohlprofilen 4 wiederholt. Nach dem Aushärten des Klebers sind die Hohlprofile gegenüber von außen eindringender Feuchtigkeit abgedichtet und gegen weitere Korrosion geschützt und deren Schwingungsdämpfungsverhalten sowie gegebenenfalls die Festigkeitseigenschaften sind verbessert.

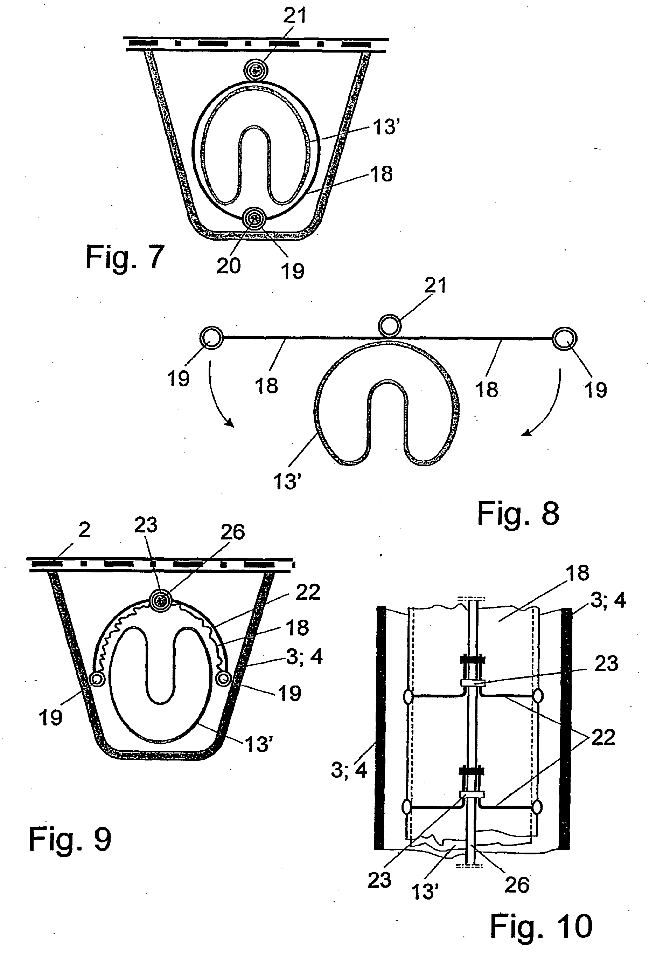

Gemäß einer noch anderen, anhand der Figuren 7 bis 12 beschriebenen Verfahrensvariante wird ein zusammengefalteter und an der Außenfläche mit Kleber beschichteter Gewebeschlauch 13' unter Verwendung einer Hilfsvorrichtung mit Hilfe einer Zugvorrichtung in das Hohlprofil 4 eingezogen. Nach Entfernen der Hilfsvorrichtung wird der an einem Ende verschlossene Gewebeschlauch 13' am gegenüberliegenden Ende mit einem Druckmedium beaufschlagt, um den Gewebeschlauch 13' aufzufalten und mit seiner mit Kleber versehenen Außenfläche an die Innenfläche des Hohlkörpers 4 anzulegen. In einem nachfolgenden Verfahrensschritt kann der Gewebeschlauch 13', soweit erforderlich, mit dem oben beschriebenen Schaumstoffmolch 15 zusätzlich an die Innenfläche des Hohlprofils 4 gepresst und gleichzeitig geglättet werden, so dass nach dem nachfolgenden Aushärtungsschritt eine sichere Abdichtung gegenüber Feuchtigkeitseintritt sowie verbesserte Materialeigenschaften des Hohlprofils 4 gewährleistet sind.

Die in den Figuren 7 bis 10 beschriebene erste Ausführungsform einer Transportvorrichtung zum Einziehen des gefalteten Gewebeschlauchs 13' in das Hohlprofil 4 umfasst eine flexible, in Längsrichtung verschließbare Transporthülle 18, bestehend aus einem Tuch mit an dessen beiden Längskanten im Abstand befestigten Verschlussösen 19, in vorliegenden Ausführungsbeispiel in Form von Karabinerhaken. Die Transportvorrichtung umfasst ferner ein Verschlussseil 20 und ein Zugseil 21. Der gefaltete Gewebeschlauch 13' wird zusammen mit der Transporthülle 18, dem Zugseil 21 und dem Verschlussseil 20 in das Hohlprofil 4 eingezogen, wobei die Transporthülle 18 an der Eintrittsseite des Hohlprofils 4 um den Gewebeschlauch 13' gelegt und die Verschlussösen 19 mit dem Verschlussseil 20 verbunden werden. Der Gewebeschlauch 13' wird somit im Schutze der dieses umhüllenden Transporthülle 18 in das Hohlprofil 4 eingezogen, so dass der Gewebeschlauch 13' und dessen Beschichtung/Klebeschicht beim Einziehen nicht beschädigt werden. Nach dem Einziehvorgang wird zuerst das Verschlussseil 20 aus den Verschlussösen 19 gezogen und anschließend wird die jetzt in Längsrichtung wieder offene Transporthülle 18 mit dem an dessen hinterem Ende befestigten Zugseil 21 - vergleichbar mit dem Abschälen einer Bananenschale - aus dem Hohlprofil 4 herausgezogen. Anschließend wird der Gewebeschlauch 13', wie oben beschrieben, mit der Innenfläche des Hohlprofils 4 verbunden.

Um das zuvor beschriebene Herausziehen der Transporthülle 18 gegebenenfalls zu erleichtern, sind in einer erweiterten Ausführungsvariante, wie die Figuren 9 und 10 zeigen, an der Transporthülle 18 in regelmäßigem Abstand Führungsösen 23 angebracht, in denen ein Raffseil 26 geführt ist, an dem im Abstand - jeweils paarweise - Radialseile 22 befestigt und durch die jeweilige Führungsöse geführt sind. An ihrem anderen - freien - Ende sind die Radialseile 22 jeweils mit einer der an der Längskante der Transporthülle 18 befestigten Verschlussösen 19 verbunden. Wenn das Verschlussseil 20, wie oben beschrieben, gezogen ist, wird die Transporthülle 18 - bei einer Zugwirkung auf das Raffseil 26 und damit über die Radialseile 22 auf die Längskanten der Transporthülle 18 - zunächst gerafft und kann anschließend mit einem Zugseil 21 in der oben beschriebenen Weise leichter aus dem Hohlprofil 4 herausgezogen werden.

Gemäß einer noch anderen, in den Figuren 11 und 12 dargestellten Ausführungsform besteht die Transporthülle 18' aus im Abstand paarweise an miteinander verbundenen Transportwagen 24 angebrachten Tragseilen 25, an deren freien Enden Verschlussoesen 19 befestigt sind. Die Transportwagen 24 bestehen aus zwei sich in einem Gelenk 28 kreuzenden Rahmenteilen 27, die durch einen Längsholm 29 fest miteinander verbunden sind. An den Enden der Rahmenteile sind winkelverstellbare Laufrollen 30 angebracht. Durch die Bereitstellung verschieden langer, vorzugsweise teleskopierbarer Rahmenteile 27 und die verstellbaren Laufrollen 30 können die Transportwagen 24 somit an unterschiedlich geformte und dimensionierte Hohlprofile 4 angepasst werden. Beim Einziehen des Gewebeschlauches 13' mittels einer auf den ersten Transportwagen 24 wirkenden Winde werden die Tragseile 25 um den Gewebeschlauch 13' gelegt. Die Enden der Tragseile 25 werden mittels der Verschlussösen 19 mit dem Verschlussseil 20 verbunden, und in der so erzeugten hängenden Position wird der Gewebeschlauch 13' in das Hohlprofil 4 schonend eingezogen. Aufeinander folgende Transportwagen 25 werden mittels einer Zugstange 31 miteinander verbunden. Nach dem Ziehen des Verschlussseils 20 liegt der gefaltete Gewebeschlauch 13' frei in dem Hohlprofil 4 und die Transportwagen 24 mit den Tragseilen 25 kann bequem aus dem Hohlprofil 4 herausgefahren werden. Die Verbindung des Gewebeschlauchs 13' mit den Innenflächen des Hohlprofils 4 erfolgt wieder in der oben beschriebenen Weise.

Wie in Fig. 13 dargestellt, kann das Hohlprofil 4 auch mit einem entsprechend dem Hohlprofil dimensionierten - hier trapezförmigen - Kunststoffprofil 14 ausgekleidet und verklebt werden. Dieses Kunststoffprofil 14 wird nach der Extrusion in noch warmem Zustand soweit - im vorliegenden Fall beispielsweise X-förmig - zusammengefaltet, dass es anschließend bequem in das an den Innenflächen mit Kleber beschichtete Hohlprofil 4 eingeführt werden kann. Das eingezogene - X-förmig "extrusierte" - Kunststoffprofil wird mit Dampf erwärmt und nimmt jetzt aufgrund des Memory-Effekts wieder seine ursprüngliche Form an. Unter Einwirkung von Druckluft während des anschließenden Abkühlvorgangs wird das Kunststoffprofil 14 an die Innenflächen des Hohlprofils gepresst und mit diesen verklebt, so dass das Hohlprofil wasserdicht abgedichtet ist und keine Feuchtigkeit von außen in das Innere des Hohlkörpers gelangen kann.

### Bezugszeichenliste

- 1: orthotrope Fahrbahnplatte
- 2: Stahlplatte
- 3: Stahlblech
- 4: Hohlprofil
- 5: Rollen
- 6: Entrostungswagen
- 7: Rahmen
- 8: Rotationsdüse
- 9: Taster
- 10: Steuereinheit
- 11: Schwenkbarer Düsenkopf
- 12: Verbindungsstelle (Schweißnaht zw. 2/3)
- 13: Gewebeschlauch
13' gefalteter Gewebeschlauch
- 14: Kunststoffprofil
- 15: Schaumstoffmolch
- 16: verschlossenes Ende v. 13
- 17: Ventil
- 18: Transporthülle
- 19: schließbare Öse/Karabinerhaken
- 20: Verschlussseil
- 21: Zugseil
- 22: Radialseil
- 23: Führungsöse
- 24: Transportwagen
- 25: Tragseil
- 26: Raffseil
- 27: Rahmenteile
- 28: Gelenk
- 29: Längsholm
- 30: Laufrollen
- 31: Zugstange

## Patentansprüche

1. Verfahren zur Innensanierung korrodierter Hohlprofile, insbesondere der Trapez-, Dreiecks- oder Trog-Hohlprofile orthotroper Fahrbahnplatten von Stahlbrücken, wobei die Innenfläche der Hohlprofile (4) mit einem kontinuierlich durch das Hohlprofil geführten rotierenden und entsprechend dem jeweiligen Profil tastergesteuert winkelverstellbaren und in kritischen Hohlprofilbereichen drosselbaren Höchstdruck-Wasserstrahl gereinigt und entrostet wird; und - zur Abdichtung gegenüber eindringender Feuchtigkeit sowie zum Korrosionsschutz und zur Verbesserung der Materialeigenschaften - die gereinigte und getrocknete Innenfläche des Hohlprofils (4) mittels eines zuvor aufgebrachten Klebers und unter der Wirkung eines Druckmediums mit einem mit wasserdichtem Kunststoff getränkten oder beschichteten form- und dehnbaren Gewebeschlauch (13, 13') oder einem unter Wärmeeinwirkung seine Ursprungsform einnehmenden Memory-Kunststoffhohlprofil (14) vollflächig abdichtend verbunden wird; und der Kleber anschließend unter Beibehaltung des Innendrucks ausgehärtet wird.

2. Verfahren nach Anspruch 1, **dadurch gekennzeichnet, dass** der Gewebeschlauch (13, 13') ein nahtlos rundgewebtes dehnbares Gewebe aus Kunststofffasern und/oder Metallfasern ist.

3. Verfahren nach Anspruch 1, **dadurch gekennzeichnet, dass** die Kunststoffbeschichtung des Gewebeschlauchs (13, 13') aus Polyurethan oder Polyethylen besteht und als Kleber ein lösemittelfreier Zweikomponentenkleber eingesetzt wird.

4. Verfahren nach Anspruch 1, **dadurch gekennzeichnet, dass** der Gewebeschlauch (13, 13') oder das Memory-Kunststoffhohlprofil (14) zum Dehnen und faltenfreien Anpressen im Innern mit Druckluft beaufschlagt wird.

5. Verfahren nach Anspruch 4, **dadurch gekennzeichnet, dass** das vollflächige Anpressen und Glätten des Gewebeschlauchs (13, 13') zusätzlich mechanisch mit einem mittels Druckluft durch den Gewebeschlauch (13, 13') gedrückten Schaumstoffmolch (15) erfolgt, dessen Profil dem des Hohlprofils (4) entspricht.

6. Verfahren nach Anspruch 1, **dadurch gekennzeichnet, dass** der Gewebeschlauch (13) zum Einbringen in das Hohlprofil an dem einen offenen Ende umgestülpt und mittels Druckluft in das Hohlprofil (4) gedrückt und dabei der am anderen Ende geschlossene Gewebeschlauch (13) mit nach außen gedrehter Innenfläche allmählich in das Hohlprofil (4) und an dessen Innenfläche gepresst wird.

7. Verfahren nach Anspruch 6, **dadurch gekennzeichnet, dass** beim anschließenden Durchschieben eines Schaumstoffmolches (15) an dem hinteren verschlossenen Ende des Gewebeschlauchs (13) ein mittels Ventil kontrollierter Luftablass erfolgt.

8. Verfahren nach Anspruch 1, **dadurch gekennzeichnet, dass** der Gewebeschlauch (13') auf einen verringerten Querschnitt gefaltet und innerhalb einer Umhüllung mittels einer Zugvorrichtung in das Hohlprofil (4) eingezogen wird, wobei das Innere des Gewebeschlauchs (13') nach Entfernen der Umhüllung mit Druckluft beaufschlagt und dabei aufgefaltet und an die Innenfläche des Hohlprofils gepresst und mit dieser abdichtend verklebt wird.

9. Verfahren nach Anspruch 1, **dadurch gekennzeichnet, dass** der Kleber unter Beibehaltung des auf den Gewebeschlauch (13, 13') oder auf das Memory-Kunststoffhohlprofil (14) wirkenden Innendrucks bei Raumtemperatur oder bei erhöhter Temperatur oder mittels UV-Licht ausgehärtet wird.

10. Verfahren nach Anspruch 1, **dadurch gekennzeichnet, dass** in kritische Eck- und Schweißnahtbereiche des Hohlprofils vor dem Einbringen des Gewebeschlauchs (13, 13') oder des Memory-Kunststoffhohlprofils (14) unter Verwendung eines durch das Hohlprofil (4) gezogenen Beschichtungsmolchs ein Abdicht- und Füllmaterial eingeformt wird, wobei die Füllung eine zum Inneren des Hohlkörpers (4) weisende Auskehlung aufweist.

11. Vorrichtung zur Durchführung des Verfahrens nach Anspruch 8, wobei ein gefalteter und umhüllter Gewebeschlauch (13') in das Hohlprofil eingezogen wird und wobei die Vorrichtung eine Entrostungsvorrichtung aufweist, bestehend aus einer in Längsrichtung des Hohlprofils verfahrbaren rotierenden Düse (8) mit einem Schwenkbaren, von einem Taster (9) über eine Steuereinheit gesteuerten Düsenkopf (11), wobei die Vorrichtung eine in Längsrichtung geteilte, flexible Transportumhüllung (18; 25) mit an deren freien Längsseiten befestigten Verschlussösen (19) sowie ein Verschlussseil (20), an dem die Verschlussösen (19) befestigbar sind, und eine Zugvorrichtung zum Einziehen des in der Transportumhüllung (18, 25) gehaltenen Gewebeschlauches (13') und zum Herausziehen der Transportumhüllung nach dem Ziehen des Verschlussseils (20) und dem Freigeben des Gewebeschlauchs (13') innerhalb des Hohlprofils (4), aufweist.

12. Vorrichtung nach Anspruch 11, **dadurch gekennzeichnet, dass** die Transportumhüllung eine bandartige Transporthülle (18) umfasst, an deren Längskanten die Verschlussösen (19) befestigt sind, wobei an dem einen Ende der Transporthülle (18) ein Zugseil (21) zum Herausschälen der Transporthülle (18) aus dem Hohlprofil (4) befestigt ist.

13. Vorrichtung nach Anspruch 12, **dadurch gekennzeichnet, dass** in Längsrichtung der Transporthülle (18) in Führungsösen (23) ein Raffseil (26) mit an diesem im Abstand paarweise befestigten und durch die Führungsösen (23) geführten Radialseilen (26) angeordnet ist, wobei die freien Enden der Radialseile jeweils mit den an den Längskanten der Transporthülle (18) vorgesehenen Verschlussösen (19) verbunden sind.

14. Vorrichtung nach Anspruch 11, **dadurch gekennzeichnet, dass** die Transportumhüllung aus an miteinander verbundenen Transportwagen (24) im Abstand befestigten Paaren von Tragseilen (25) mit an deren Enden angebrachten Verschlussösen (19) und einem Verschlussseil (20)besteht, wobei die Transportwagen (24) zum Einziehen des umhüllten Gewebeschlauchs (13') an eine Zugvorrichtung angeschlossen sind und das nach dem Einziehen gezogene Verschlussseil (20) den Gewebeschlauch (13') innerhalb des Hohlprofils (4) freigibt.

15. Vorrichtung nach Anspruch 14, **dadurch gekennzeichnet, dass** die Transportwagen (24) aus jeweils zwei sich in einem Gelenk (28) überkreuzenden und über einen Längsholm (29) verbundenen, teleskopierbaren Rahmenteilen (27) mit an deren Enden winkelverstellbar und federnd angebrachten Laufrollen (30) bestehen, und aufeinanderfolgende Transportwagen (24) über eine Zugstange (31) miteinander verbunden sind.

## Claims

1. A method for the internal refurbishment of corroded hollow sections, in particular the trapezoidal, triangular or trough hollow sections of orthotropic road slabs of steel bridges, wherein the inner surface of the hollow sections (4) is cleaned and derusted with a rotating maximum-pressure water-jet continuously guided through the hollow section and angle-adjustable corresponding to the respective profile controlled by a scanner and capable of being throttled in critical hollow-section regions; and - for sealing against entering moisture and for corrosion protection and for the improvement of the material characteristics - the cleaned and dried inner surface of the hollow section (4) is holohedrally connected in a sealing manner by means of a previously applied adhesive and under the effect of a pressure medium with a shapeable and stretchable fabric hose (13, 13') saturated or coated with a water-proof plastic or a memory plastic hollow profile (14) assuming its original shape under the effect of heat; and the adhesive is subsequently cured while the internal pressure is maintained.

2. The method according to Claim 1, **characterized in that** the fabric hose (13, 13') is a seamless round-woven stretchable fabric of plastic fibres and/or metal fibres.

3. The method according to Claim 1, **characterized in that** the plastic coating of the fabric hose (13, 13') consists of polyurethane or polyethylene and that a solvent-free two-component adhesive is employed as adhesive.

4. The method according to Claim 1, **characterized in that** the fabric hose (13, 13') or the memory plastic hollow profile (14) for stretching and crease-less pressing-on in the interior is subjected to compressed-air pressure.

5. The method according to Claim 4, **characterized in that** the holohedral pressing-on and smoothing of the fabric hose (13, 13') is additionally performed mechanically with a foam rubber pig (15) pushed through the fabric hose (13, 13') by means of compressed air the profile of said foam rubber pig corresponds to that of the hollow section (4).

6. The method according to Claim 1, **characterized in that** the fabric hose (13) for introduction in the hollow section is turned inside out at the one open end and pushed into the hollow profile (4) by means of compressed air and in the process the fabric hose (13) sealed at the other end with the inner surface turned inside out is gradually pressed into the hollow section (4) and against the inner surface of the latter.

7. The method according to Claim 6, **characterized in that** during the subsequent pushing-through of a foam rubber pig (15) at the rear sealed end of the fabric hose (13) controlled air discharge takes place controlled by means of a valve.

8. The method according to Claim 1, **characterized in that** the fabric hose (13') is folded to a reduced cross section and within a sleeving is pulled into the hollow section (4) by means of a pulling device, wherein the interior of the fabric hose (13') following the removal of the sleeving is subjected to compressed-air pressure and in the process unfolded and pressed against the inner surface of the hollow section and glued to the latter in a sealing manner.

9. The method according to Claim 1, **characterized in that** the adhesive while maintaining the internal pressure acting on the fabric hose (13, 13') or on the memory plastic hollow profile (14) is cured at room temperature or with elevated temperature or by means of UV-light.

10. The method according to Claim 1, **characterized in that** in critical corner and weld-seam regions of the hollow section before the introduction of the fabric hose (13, 13') or the memory plastic hollow profile (14) a sealing and filling material is formed in using a coating pig pulled through the hollow section (4), wherein the filling comprises a filleting facing the interior of the hollow body (4) .

11. A device for carrying out the method according to Claim 8, wherein a folded and enveloped fabric hose (13') is pulled into the hollow section (4), and wherein the device comprises a de-rust device consisting of a rotating nozzle (8) movable in longitudinal direction of the hollow section (4) with a pivoted injector head (11) controlled by a scanner (9) via a control unit, wherein the device has a flexible transport sleeving (18; 25) split in longitudinal direction with closing eyes (19) attached to the free longitudinal sides of said sleeving as well as a closing cable (20), to which the closing eyes (19) can be attached, and a pulling device for the pulling-in of the fabric hose (13') held in the transport sleeving (18, 25) and for the pulling-out of the transport sleeving after the pulling of the closing cable (20) and the releasing of the fabric hose (13') within the hollow section (4).

12. The device according to Claim 11, **characterized in that** the transport sleeving comprises a band-like transport sleeve (18) to whose longitudinal edges the closing eyes (19) are attached, wherein on the one end of the transport sleeve (18) a pulling cable (21) for the peeling-out of the transport sleeve (18) from the hollow section (4) is attached.

13. The device according to Claim 12, **characterized in that** in longitudinal direction of the transport sleeve (18) in guiding eyes (23) a gathering cable (26) with radial cables (26) attached to the former spaced in pairs and guided through the guiding eyes (23) is arranged, wherein each of the free ends of the radial cables is connected with the closing eyes (19) provided on the longitudinal edges of the transport sleeve (18).

14. The device according to Claim 11, **characterized in that** the transport sleeving consists of pairs of support cables (25) attached spaced to transport carts (24), which are connected with one another, with closing eyes (19) attached to the ends of said support cables and a closing cable (20), wherein the transport carts (24) for the pulling-in of the enveloped fabric hose (13') are connected to a pulling device and the closing cable (20) pulled after the pulling-in releases the fabric hose (13') within the hollow section (4).

15. The device according to Claim 14, **characterized in that** the transport carts (24) each consist of two telescopic frame parts (27) crossing each other in a joint (28) and connected via a longitudinal bar (29) with running rollers (30) attached to their ends angle-adjustably and resiliently, and transport carts (24) following one another are connected with one another via a drawbar (31).

## Revendications

1. Procédé pour l'assainissement interne d'un profil creux corrodé, en particulier des profils creux trapézoïdaux, triangulaires ou d'auge des tabliers orthotropes des ponts en acier, dans lequel la surface intérieure des profils creux (4) est nettoyée et dérouillée avec un jet d'eau à pression maximale guidé en continu à travers le profil creux, rotatif, à angle réglable par commande à bouton-poussoir en fonction de chaque profil, et étranglable dans les zones critiques du profil creux ; et dans lequel - pour l'étanchement par rapport à l'humidité entrante, ainsi que pour la protection contre la corrosion et l'amélioration des propriétés de matériau - la surface intérieure nettoyée et séchée du profil creux (4) est reliée de façon étanche, sur toute sa surface, au moyen d'une colle appliquée à l'avance et sous l'action d'un moyen de pression, à un tube textile (13, 13') extensible et déformable, imprégné ou enduit d'un plastique imperméable à l'eau, ou à un profil creux en plastique à mémoire (14) prenant sa forme initiale sous l'action de la chaleur ; et dans lequel la colle est ensuite durcie en maintenant la pression intérieure.

2. Procédé selon la revendication 1, **caractérisé en ce que** le tube textile (13, 13') est constitué d'un tissu extensible, tissé en rond sans soudure, en fibres synthétiques et/ou en fibres métalliques.

3. Procédé selon la revendication 1, **caractérisé en ce que** le revêtement synthétique du tube textile (13, 13') est constitué de polyuréthane ou de polyéthylène, et une colle à deux composants exempte de solvants est utilisée en tant que colle.

4. Procédé selon la revendication 1, **caractérisé en ce que** le tube textile (13, 13') ou le profil creux en plastique à mémoire (14) est soumis à de l'air comprimé à l'intérieur, pour l'extension et l'application sans plis.

5. Procédé selon la revendication 4, **caractérisé en ce que** l'application et le lissage sur toute la surface du tube textile (13, 13') s'effectuent en outre de façon mécanique, au moyen d'un ramoneur en mousse (15) poussé à travers le tube textile (13, 13') avec de l'air comprimé, dont le profil correspond à celui du profil creux (4).

6. Procédé selon la revendication 1, **caractérisé en ce que** pour son introduction dans le profil creux, le tube textile (13) est replié à une extrémité ouverte et enfoncé dans le profil creux (4) avec de l'air comprimé, le tube textile (13) fermé à l'autre extrémité étant dans le même temps poussé progressivement dans le profil creux (4), avec sa face intérieure tournée vers l'extérieur, et pressé contre la surface intérieure de celui-ci.

7. Procédé selon la revendication 6, **caractérisé en ce que** lors de l'introduction consécutive d'un ramoneur en mousse (15), l'air est évacué de façon contrôlée au moyen d'une soupape, à l'extrémité arrière fermée du tube textile (13).

8. Procédé selon la revendication 1, **caractérisé en ce que** le tube textile (13') est plié de manière à réduire sa section transversale et tiré dans le profil creux (4) à l'intérieur d'une enveloppe, au moyen d'un dispositif de traction, l'intérieur du tube textile (13') étant soumis à une pression après le retrait de l'enveloppe, tout en étant ainsi déplié et pressé contre la surface intérieure du profil creux, et collé de façon étanche avec celle-ci.

9. Procédé selon la revendication 1, **caractérisé en ce que** la colle est durcie à température ambiante ou à une température élevée ou encore au moyen d'une lumière ultraviolette, tout en maintenant la pression intérieure exercée sur le tube textile (13, 13') ou sur le profil creux en plastique à mémoire (14).

10. Procédé selon la revendication 1, **caractérisé en ce que** dans les zones critiques de coin et de soudure du profil creux, avant l'introduction du tube textile (13, 13') ou du profil creux en plastique à mémoire (14), un matériau de remplissage et d'étanchéité est intégré à l'aide d'un ramoneur de revêtement tiré à travers le profil creux (4), le remplissage comportant une gorge tournée vers l'intérieur du corps creux (4).

11. Dispositif pour l'exécution du procédé selon la revendication 8, dans lequel un tube textile (13') enveloppé et plié est tiré dans le profil creux (4), et dans lequel le dispositif comporte un dispositif de dérouillage, constitué d'une buse rotative (8) déplaçable dans le sens longitudinal du profil creux (4), avec une tête de buse (11) pivotante commandée par un bouton-poussoir (9) par le biais d'une unité de commande, le dispositif comportant une enveloppe de transport (18 ; 25) souple et divisée dans le sens longitudinal, avec des oeillets de fermeture (19) fixés sur ses côtés longitudinaux libres, ainsi qu'un câble de fermeture (20) auquel peuvent être fixés les oeillets de fermeture (19), et un dispositif de traction pour tirer le tube textile (13') maintenu dans l'enveloppe de transport (18, 25), et pour retirer l'enveloppe de transport, après la traction du câble de fermeture (20) et la libération du tube textile (13') à l'intérieur du profil creux (4).

12. Dispositif selon la revendication 11, **caractérisé en ce que** l'enveloppe de transport comprend une gaine de transport (18), avec des oeillets de fermeture (19) fixés sur ses bords longitudinaux, un câble de traction (21) étant fixé à une extrémité de la gaine de transport (18), pour l'extraction de la gaine de transport (18) hors du profil creux (4).

13. Dispositif selon la revendication 12, **caractérisé en ce que** dans le sens longitudinal de la gaine de transport (18), un câble de serrage (26) est disposé dans des oeillets de guidage (23), avec des câbles radiaux (26) fixés à celui-ci de façon espacée, par paires, et guidés à travers les oeillets de guidage (23), les extrémités libres des câbles radiaux étant reliés respectivement aux oeillets de fermeture (19) prévus sur les bords longitudinaux de la gaine de transport (18).

14. Dispositif selon la revendication 11, **caractérisé en ce que** l'enveloppe de transport est constituée de paires de câbles de support (25) fixés de façon espacée à des chariots de transport (24) reliés entre eux, avec des oeillets de fermeture (19) fixés à leurs extrémités et un câble de fermeture (20), dans lequel les chariots de transport (24) sont rattachés à un dispositif de traction pour tirer le tube textile (13') enveloppé, et le câble de fermeture (20) tiré après la traction libère le tube textile (13') à l'intérieur du profil creux (4).

15. Dispositif selon la revendication 14, **caractérisé en ce que** les chariots de transport (24) sont constitués chacun de deux pièces de cadre (27) télescopiques, reliées par un longeron (29) et se croisant en une articulation (28), aux extrémités desquelles sont fixés élastiquement des galets de roulement (30) à angles réglables, les chariots de transport (24) consécutifs étant reliés entre eux par une barre de traction (31).
